(19) Europäisches Patentamt
European Patent Office
Office européen des brevets

(11) EP 4 701 210 A1

(12) EUROPEAN PATENT APPLICATION

(43) Date of publication:
**25.02.2026 Bulletin 2026/09**

(21) Application number: **24306391.4**

(22) Date of filing: **23.08.2024**

(51) International Patent Classification (IPC):
***H04N 21/81*** *(2011.01)* ***G06T 13/20*** *(2011.01)*
***H04N 21/8543*** *(2011.01)* ***H04N 21/8545*** *(2011.01)*

(52) Cooperative Patent Classification (CPC):
**H04N 21/8146; G06T 13/20; H04N 21/816; H04N 21/8543; H04N 21/8545**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **GOSSELIN, Philippe Henri
35235 THORIGNE-FOUILLARD (FR)**
- **LE CLERC, Francois
35590 L'HERMITAGE (FR)**
- **COVA REGATEIRO, João Pedro
35220 CHATEAUBOURG (FR)**

(74) Representative: **Vossius & Partner Patentanwälte Rechtsanwälte mbB
Siebertstraße 3
81675 München (DE)**

# (54) CARRIAGE FORMAT FOR AVATAR CONTROLLERS

(57) Some embodiments of a method may include: obtaining a plurality of first syntax structures, each first syntax structure defining an association between an input controller index value and a corresponding target controller index value for at least one mesh associated with an avatar; selecting one of the first syntax structures; and applying, to a mesh associated with the avatar, a transformation using the selected first syntax structure.

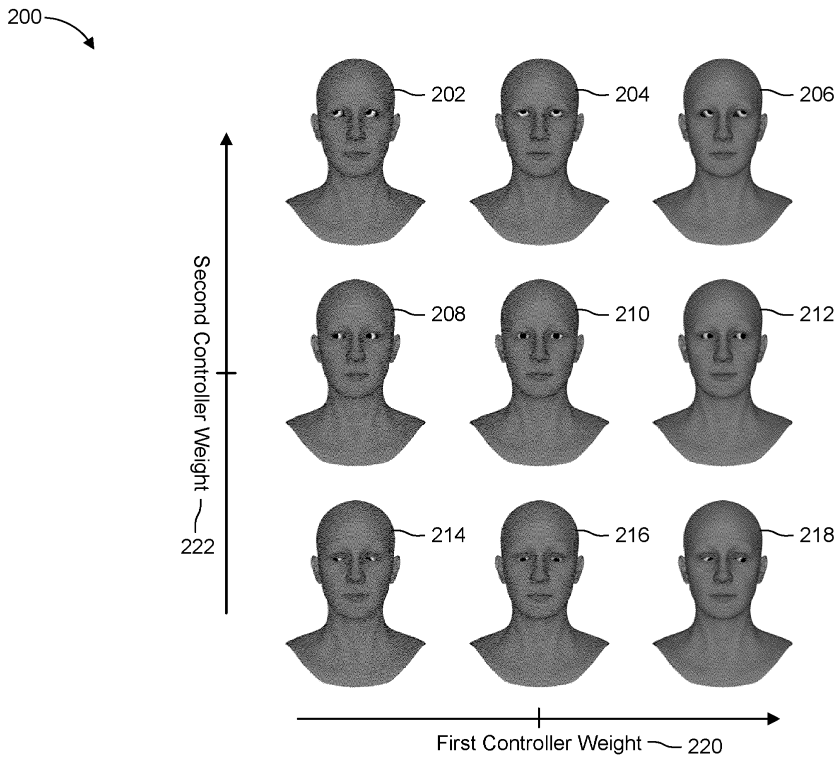


FIG. 2



Processed by Luminess, 75001 PARIS (FR)

## Description

### INCORPORATION BY REFERENCE

The present application incorporates by reference in their entirety the following applications: European Patent Application Serial No. EP24305521, entitled "CARRIAGE FORMAT FOR AVATAR MAPPING AND ANIMATION" and filed April 4, 2024 ("'521 application"); European Patent Application Serial No. EP24305458, entitled "AVATAR CONTROLLERS IN SCENE DESCRIPTIONS" and filed March 27, 2024 ("'458 application"); European Patent Application Serial No. EP24305094, entitled "AVATAR JSON INTERCHANGE FILE FORMAT" and filed on January 15, 2024 ("'094 application"); European Patent Application Serial No. EP23306701, entitled "CONTROLLERS USER INTERFACE ENCODING IN SCENE DESCRIPTION" and filed October 4, 2023 ("'701 application"); and European Patent Application Serial No. EP23306167, entitled "CONTROLLERS FOR 3D SCENE DESCRIPTIONS" and filed July 10, 2023 ("'167 application").

### BACKGROUND

The present application is related to transmission of avatar animation data.

### SUMMARY

An example method in accordance with some embodiments may include: obtaining a plurality of first syntax structures, each first syntax structure defining an association between an input controller index value and a corresponding target controller index value for at least one mesh associated with an avatar; selecting one of the first syntax structures; and applying, to a mesh associated with the avatar, a transformation using the selected first syntax structure.

Some embodiments of the example method may further include obtaining a plurality of second syntax structures, each second syntax structure defining an association between an input weight value and a corresponding transformation of the mesh associated with the avatar.

Some embodiments of the example method may further include: selecting one of the second syntax structures corresponding to the selected first syntax structure; and applying, to the mesh associated with the avatar, a transformation using the selected second syntax structure.

Some embodiments of the example method may further include: obtaining a plurality of third syntax structures, each third syntax structure defining an association between a separate input weight value and a corresponding transformation of the mesh associated with the avatar; selecting one of the third syntax structures; and applying, to a mesh associated with the avatar, a transformation using the selected second and third syntax structures.

For some embodiments of the example method, at least one of the first and second syntax structures are controller structures in an MPEG_controllers extension.

For some embodiments of the example method, wherein at least one of the first and second syntax structures are controller structures, and wherein at least one of the first and second syntax structures are obtained from a glTF file.

Some embodiments of the example method may further include obtaining a plurality of fourth syntax structures, each fourth syntax structure defining an association between a second input controller index value and a corresponding second target controller index value for at least a second mesh associated with the avatar; obtaining a plurality of fifth syntax structures, each fifth syntax structure defining an association between another input weight value and a corresponding transformation of the second mesh associated with the avatar; selecting one of the fourth syntax structures and an associated structure of the fifth syntax structures; and applying, to a mesh associated with the avatar, a transformation using the selected fourth and fifth syntax structures.

Some embodiments of the example method may further include displaying, in an immersive environment, the mesh associated with the avatar.

For some embodiments of the example method, the mesh associated with the avatar is also associated with a node in a scene description.

Some embodiments of the example method may further include animating the node associated with the avatar by applying changing weights to the transformation corresponding to one of the selected first syntax structure and the selected second syntax structure.

For some embodiments of the example method, the association defined in each first syntax structure corresponds to a mapping between a source mesh and a target mesh.

For some embodiments of the example method, wherein the source mesh corresponds to a first resolution, wherein the target mesh corresponds to a second resolution, and wherein the first resolution is different than the second resolution.

For some embodiments of the example method, wherein the source mesh corresponds to a first avatar, wherein the target mesh corresponds to a second avatar, and wherein the first avatar is distinct from the second avatar.

For some embodiments of the example method, at least one controller associated with the first syntax structure is associated with an emotion corresponding to the avatar.

An example apparatus in accordance with some embodiments may include: a processor; and a memory storing instructions operative, when executed by the processor, to cause the apparatus to perform the method of any one of the methods listed above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1A is a system diagram illustrating an example set of interfaces for a system according to some embodiments.

FIG. 1B is a system diagram illustrating an example set of interfaces for a scene description (stored as an item in gITF.json), three video tracks, an audio track, and a JSON patch update track in an ISOBMFF file according to some embodiments.

FIG. 1C is a system diagram illustrating an example set of interfaces for an MPEG-I node hierarchy supporting elements of scene interactivity according to some embodiments.

FIG. 1D is a schematic plan view illustrating example relationships of extended reality scene description objects according to some embodiments.

FIG. 2 is a schematic illustration showing an example combination of two controllers to animate an avatar gaze according to some embodiments.

FIG. 3 is a flowchart illustrating an example process for updating controller information according to some embodiments.

FIG. 4 is a flowchart illustrating an example process for applying an avatar controller according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

**Scene Description Framework for XR**

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

FIG. 1B is a system diagram illustrating an example set of interfaces for a scene description (stored as an item in glTF.json), three video tracks, an audio track, and a JSON patch update track in an ISOBMFF file 182 according to some embodiments.

**Runtime Interactivity**

FIG. 1C is a system diagram illustrating an example set of interfaces for an MPEG-I node hierarchy 184 supporting elements of scene interactivity according to some embodiments.

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 (*"MPEG Extension"*).

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application discusses the transmission of animation data of different avatar representations. The application further discusses supports for streaming animation based on controllers that are timed-based and that may be used by real-time streaming applications. For some embodiments, controllers are a generalization of morph targets (also called blendshapes), which allows the modification of a mesh given a set of weights.

**glTF 2.0**

As understood, the current contributions in MPEG for the streaming of animation data are linked with the reanimation of volumetric meshes through pre-computed correspondences to a template mesh (shadow mesh). See the standard *Information Technology Coded Representation of Immersive Media Part 14: Scene Description,* ISO/IEC, ISO/IEC 23090-14:2023 (2023) (*"ISO/IEC 23090-14:2023'*).

A shadow mesh in the context of *ISO/IEC 23090-14:2023* is a mesh that contains a lower fidelity than a volumetric mesh. The correspondences between the two are performed in such a way that each vertex of the volumetric mesh maps to a polygon of the shadow mesh.

The objective of the shadow mesh is to provide additional semantical information to the volumetric mesh , e.g., a skeletal structure and lower polygon mesh representation, which permits the transfer of animations of the shadow mesh onto the dependent volumetric mesh.

At the application level, the volumetric mesh follows the motion of the shadow mesh as a result of the mapping between the two meshes. This behavior is achieved by defining in glTF a correspondence schema, which is illustrated in Table 1. Table 1 shows a definition of the MPEG_mesh_linking extension. See *ISO/IEC 23090-14:2023.*

**Table 1.**

| Name | Type | Description |
|---|---|---|
| correspondence | integer | Provides a reference to the accessor |
| mesh | integer | Provides a reference to the shadow mesh |
| pose | integer | Provides a reference to the accessor |
| weights | integer | Provides a reference to the accessor |

The "MPEG_mesh_linking" extension is dependent on circular buffers ("MPEG_buffer_circular") and timed accessors ("MPEG_accessor_timed") to produce timed animations that are dependent on the shadow mesh.

The *correspondence* integer provides a reference to the accessor that describes the buffer where the correspondence between a dependent mesh and a shadow mesh is established.

The mesh integer provides a reference to a mesh in the list of meshes that are referred to as "shadow mesh" and to which the correspondences are established.

The *pose* integer provides a reference to the accessor that describes the buffer that contains the transformation matrices of all the nodes of the dependent mesh to be re-animated.

The *weights* integer provides a reference to the accessor that describes the buffer where the morph targets weights of the shadow mesh associated with the dependent mesh is available.

The main objective of this extension is to provide a dynamic mesh sequence e.g., the mesh topology changes per timed frame, and allow a template mesh (shadow mesh) to either re-animate a frame of the dynamic mesh sequence or to introduce animation on a per-frame basis. In either case, a carriage mechanism is needed to make this information available on a timed basis.

The shadow mesh is introduced via a linking with an MPEG mesh. The purpose of the MPEG mesh linking is to link a "regular" mesh configuration to a "free" mesh. The MPEG linking also is introduced with concepts like MPEG_buffer_circular to allow a streaming animation of a mesh. These concepts respond somewhat to the problem raised by the disclosure, but not completely.

The aim of the application, for some embodiments, is to enable streaming of a mapping (or linking) of "rig" parameters (like morph targets or keypoints) and "rig" parameter weights (like morph target weights). For some embodiments, the source and target are the two items (meshes or more generally avatars) that are mapped/linked. For some embodiments, the source and target may be the same. For some embodiments, such a mapping may look like an MPEG mesh linking but not exactly because an MPEG mesh linking is not limited to the combination of a general mesh and a "rig" mesh.

For some embodiments, a simpler (e.g., reduced resolution) mesh is provided and set as the source mesh. A more complex (e.g., higher resolution) mesh is set as the target mesh. Correspondences between these two meshes may be defined. Such correspondences, along with controller animation samples, may be sent to a device to drive animation of the source mesh.

For some embodiments, a source mesh and a target mesh may point to the same mesh. In such a scenario, correspondences between the source mesh and the target mesh may not be needed. As such, controller animation samples are sent to a device to effectively "directly animate" the target mesh (or source mesh for some embodiments).

For some embodiments, any two different avatars may be used, as long as a mapping exists between the two avatars. For example, the same avatar may be used for the source and target meshes except that these meshes are at different resolutions. Other examples may include some of the following scenarios: an avatar that models the body and any humanoid avatar; two similar avatars; and completely different avatars, such as a human-based avatar and an avatar corresponding to a device, such as a car. The mapping depends on the components to be mapped. For instance, for vertices, such a mapping may be complicated if the two avatar meshes are different. For controllers, such a mapping may be somewhat less complicated if the list of controllers are emotions (like a smile or a sad face) because there are no geometry constraints. In the scenario of the human-based avatar and an avatar corresponding to a car, animations may be created to make the car "smile."

The carriage format specified in the MPEG-I SD is understood to allow updating of the correspondences and/or the pose and morph target coefficients in a timed-based manner by making use of both the "MPEG_buffer_circular" and "MPEG_accessor_timed" structures.

The MEPG_accessor_timed structure is an extension to the accessor that defines the types and layout of the data stored in a buffer that is referenced by a "bufferView". For the scenario in which the timed media is accessed in a buffer, the data in the buffer is expected to change with time. Hence, "MPEG_accessor_timed" defines an extension to the accessor to allow the description of dynamically changing data. When "MPEG_accessor_timed" is defined as an extension of the accessor, the buffer shall be called "MPEG_buffer_circular" for some embodiments.

The MPEG_buffer_circular structure allows for the content of the buffer to be timed media that dynamically changes over time. When this extension is in use, the property "uri" shall not be present, and "byteLength" shall indicate the maximum possible size to accommodate the total number of frames. This type of buffer is used for data streaming from media files. The Media Access Function (MAF) manages multiple tracks and formats the buffer to be available in the presentation engine.

The carriage format specifies the following classes to handle the case of "MPEG_mesh linking" for *ISO/IEC 23090-14:2023:* VertexCorrespondenceSampleEntry(), VerticesCorrespondenceSample, PoseTransformationSampleEntry(), and PoseTransformationSample.

For the class VertexCorrespondenceSampleEntry(), the integer *precision* specifies the length in bytes of the correspondence values within each sample. The value of *precision* is greater than 0 and smaller or equal to 4.

For the class VerticesCorrespondenceSample, the integer vertex_count specifies the number of vertices of the mesh to which this sample applies and specifies the number of face_index[i] values present in the sample. The array face_index[i] specifies the index of a face in a shadow mesh mapped to a vertex of a dependent mesh for index i.

For the class PoseTransformationSampleEntry(), the integer number_of_nodes specifies the number of nodes for which the transformation is described. The array node_index[i] specifies the index of the nodes array in the glTF file to which the i-th node in the sample applies. The integer number_of_morph_targets specifies the number of morph targets for which a weight is provided.

For the class PoseTransformationSample, the array matrix[i] specifies the transformation matrix of the i-th node. The array weight[i] specifies the weight to be applied to the i-th morph target.

The dynamic data in the correspondences is used to update the link between the dependent mesh and the shadow mesh. The dynamic data in pose and weights are relative to the shadow mesh. This means that the accuracy of the animation of the dependent mesh is strongly constrained by the accuracy of the correspondences between the vertices and polygons of both geometries (dependent mesh and shadow mesh). This constraint is a strong limitation for virtual human digitalization (avatar) and interoperability between different digital environments.

An avatar may have distinct geometry representations that make correspondence between shapes unreliable. Avatars are typically represented by computer graphics (CG) generated meshes e.g., they contain a mesh, skeleton, shape semantics, animation semantics, animation controllers, and may be represented/manipulated with higher-level representations (Principal Components Analysis (PCA) coefficients). Such an avatar representation is easier to manipulate, re-animate, and/or map onto other avatar representations.

The current glTF 2.0 format is understood to not support controllers. The ’521 application discusses signaling of the mapping and sample data of different avatar components, including morph targets, but not controllers.

**Overview of Controllers and Animations**

In glTF, animations are conventionally structured in JSON (JavaScript Object Notation) format as described below. An "animations" array includes one or more "animation" objects. Each "animation" object includes information identifying the component to be animated, called the "target," and information identifying the corresponding data used to perform the animation, called a "sampler." This connection between the target of the animation and the sampler is made in a "channel" object. The channel object further includes information indicating how the data affects the target of the animation. For example, where the target of the animation is a mesh, the channel object may indicate whether the animation data is used to translate the mesh, to rotate the mesh, or to change the displacement of certain vertices of the mesh using "morph target weights" that have been defined for the mesh.

The "sampler" object that provides the data for the animation has "input" and "output" properties. Data associated with the "output" property indicates the transformation to be applied to the component of the scene. For example, where the transformation is a translation, the "output" data may provide the components of different vectors representing different displacements. Where the transformation is a rotation, the "output" data may provide the components of different rotation matrices. Where the transformation is applied to a morph target, the "output" data may provide different weights. The "input" property is used to help determine which of these output vectors, matrices, or weights is to be applied to the relevant component of the scene. The input property may correspond to a list of times. As an example, a sampler may identify an input with five different time values and an output with five different rotation matrices. Heuristically, these may be thought of as the columns of a table, in which a system performing an animation looks up the current time (e.g., the time since the beginning of the animation) in the "input" column and finds the appropriate rotation matrix in the "output" column. The times that are explicitly listed in the "input" column are referred to as the times of animation key frames. Interpolation is used when the current time is not one of the times listed explicitly in the "input," with the type of interpolation (e.g., "step," "linear," or "cubicspline") being indicated in the sampler object.

(To be more specific, the attributes of the "input" and "output" properties of a "sampler" object are not necessarily the relevant input or output data itself; instead, the attributes may be indices of objects called "accessors" that are used to access the relevant data, possibly through one or more additional layers of abstraction. Such details, however, are not necessary for the understanding of the principles described herein.)

A "controller" may be described as an object that is analogous to an animation but that transforms mesh properties given an input weight instead of an input time. For example, a controller object may include one or more sampler objects with respective inputs and outputs, and one or more channel objects that associate these samplers with corresponding mesh properties. Given an input weight, each sampler provides a corresponding transformation as its output, and that transformation may be applied to the appropriate mesh property identified by the channel objects. Controller objects provide greater flexibility than animation objects, at least in part because controller weights are not inherently functions of time (though controller weights may be animated as a function of time). Thus, the details of a controller-mediated transformation may be modified independently of the timeline of the scene animation as a whole.

The MPEG_controllers extension has features for controllers and controller weights. For the array controllers[], each controller defines a function that changes mesh properties given a weight between a minimum and maximum value. For the array weights[], each value defines the weight of the respective controller.

Example embodiments may optionally include a component that defines a user interface for controllers, which may be used to change one or more controller weights. The "MPEG_controllers" extension may be described as shown in Table 2.

**Table 2.**

| Name | Type | Description | Required |
|---|---|---|---|
| controllers | Controller[1-*] | List of *Controllers* | Yes |
| weights | number[1-*] | Controller weights | Yes |
| ui | ControllersUI | UI definition | No |

Table 2 describes features of the MPEG_controllers property, including a "ui" property. Note that in this and all other tables in the present disclosure, the column "required" (or an M for "mandatory") indicates whether a feature is required or mandatory under the particular syntax illustrated in the table. An indication that a particular feature is "required" or "mandatory" for that particular syntax does not mean that the feature is a required feature of all embodiments. There may be other embodiments in which such features are not required.

In some embodiments, the number of items in "controllers" and "weights" is constrained to be the same.

In some embodiments, each controller in the "controllers" list of MPEG_controllers defines a function that changes one or more properties of a mesh. For example, in some embodiments, a controller changes the positions of the mesh vertices and thus models a deformation of the mesh.

The shape of the function associated to the controller is defined by a set of (input weight, output property change) values. The encoding of these values may be performed for compatibility with the keyframing scheme used in the corresponding animations (e.g., glTF animations). The keyframe timings pointed to by the samplers input attributes are mapped to the function input weights. The animated values pointed to by the channels target attributes are mapped to the output property change values. Thus, the animation framework (e.g., the glTF animation framework) is leveraged to shape up each controller as a possibly non-linear function of input weight control values.

In some embodiments, a controller is defined in a runtime asset delivery file. A controller is defined by an instance of the "controller" property. The controller property may include one or more of the attributes. The column "required" indicates attributes that are required to be included in at least some implementations of the controller property, though the same attributes may not be required in other implementations.

**Table 3.**

| Name | Type | Description | Required |
|---|---|---|---|
| name | String | Controller name | No |
| animation | Integer | The index of an animation in the gltf *animations* asset. If this property is set, then "min" is considered and "channels", "samplers" and "extensions" properties are ignored. | No |
| min | Number | Controller minimum weight. Ignored if "animation" is not defined. | No, default 0 |
| channels | AnimationChannel[1-*] | List of *Animation Channel.* Ignored if "animation" is set. | No |
| samplers | AnimationSampler[1-*] | List of *AnimafionSampler.* Ignored if "animation" is set. | No |
| extensions | Extensions | JSON object with extension-specific objects. | No |
| extras | Extras | Application-specific data. | No |

In some embodiments, the Controller property has the same attributes as the standard Animation property of glTF, plus two additional ones: "animation" and "min".

In some embodiments, there are two modes for this property that depend on the definition of the "animation" property. If this one does not exist, then the controller directly defines the function, otherwise, it uses the one of an existing animation. In some implementations, the definition of a controller is constrained to be in one of the two modes, with other combinations leading to an error. In all modes, the "name" property may define the name of the controller. If it is not defined, the application may choose a name based on the index of the controller, like "controller_23" or "controller_0023"

In some embodiments, the "animation" property is not defined in the controller, in which case the controller directly defines its function. In this case, the "min" property is ignored. All the other properties ("channels", "samplers", "name", "extensions", and "extras") may be used according to those of a standard animation property. A usual animation parser may be run, except that time is considered as input weight values, and its minimum value may be negative.

In some embodiments, the "animation" property is defined in the controller. In such embodiments, the controller may not define its function but uses the one of an animation. In this case, the following properties may be ignored: "channels", "samplers". The properties "name", "extensions", and "extras", however, may still be used when the animation property is defined.

The "animation" property defines the index of an animation in the "animations" asset. In this case, the function defined by the animation is used as a controller, except that time is considered as input weight values, and its minimum is shifted by the value of the "min" property. For instance, if "min" is -1.3, then animation time is decreased by -1.3, as if the animation was starting at -1.3 seconds. This property allows the definition of controllers with negative input weight values while referencing a glTF animation for which time cannot be negative.

In some embodiments, the "weights" attribute of the MPEG_controllers structure contains an array of numbers (e.g., floating values) that define the weight associated to each controller. The weights are provided in the same order as the order of the controllers in the "controllers" list: Hence, weights[0] corresponds to controllers[0]; weights[1] corresponds to controllers[1], and so on.

These weights provide information regarding how the nodes targeted by the controllers change. In some embodiments, each weight is used to apply its corresponding controller, proceeding iteratively from the first one to the last one. For example, the function controllers[0] may be applied first with weights[0] to update the nodes. These updated nodes are modified by the function controllers[1] with weights[1], and so on. These updates may be expressed as shown in Eq. 1:

$$scene_{out} = f_{n-1}(w_{n-1}, f_{n-2}(w_{n-2}, \dots f_0(w_0, scene_{in}))) \quad (1)$$

where $f_i$ is the function of controllers[i]; $w_i$ is weights[i]; $scene_{in}$ is the initial node, and $scene_{out}$ is the updated nodes using the controllers and the weights.

In some embodiments, the controller changes happen at the same step as animations: they are applied on the initial nodes content and before any transform in the other glTF properties (like the one in the "nodes" assets).

In some embodiments, controllers are not activated when glTF parsing is done; like animations, the application chooses whether or not to enable the controllers.

In some embodiments, controllers are not used with animations; the application may choose whether it enables controllers or one of the animations.

In some embodiments, controllers are animated using an extension such as KHR_animation_pointer, in which case an animation is defined with this extension to animate the controller weights (analogous to the use of morph target weights).

**Controllers**

Controllers are features widely used in industry to animate rigs, including humanoid rigs. There are, to some extent, enhanced morph targets (or blendshapes). Like morph targets, a weight is attached to each controller. A zero weight has usually no effect. A positive weight starts the modification of the shape. A negative weight may have an inverse modification. There is a weight range for each controller. The amount of modification is controlled and cannot go beyond the predefined values.

However, contrary to morph targets as understood, modifications are not limited to a weighted addition of vertex displacements. A controller may perform any modification of a mesh given a weight. Furthermore, the effect of the weight may be non-linear, while morph targets are understood to support only linear weight combinations.

In a way, a controller looks like an animation, except that time is replaced by a weight, and a weight may be negative. An animation may be seen as a (possibly non-linear) function of time that maps a modification of the shape. Depending on the encoding format (like glTF), an animation may make many different modifications, like changing the morph target weights or change the transform of a node. However, animations are made to do modifications from time 0 to the end of its time range. They are understood to not be run with arbitrary time values. Furthermore, as understood, animations are not made to be combined, especially with different and arbitrary positive time values. On the other hand, controllers, like morph targets, are made to be combined with different arbitrary weight values (positive or negative). For some embodiments, if the index *controller_index[i]* of a controller in the target mesh is invalid, then the corresponding source controller i has no corresponding target controller. For example, a source mesh may be a human avatar, and there may be controllers for turning left and right the head of an avatar. The target mesh may be an animated car that does not have a head/neck structure. Hence, no "head turning" controller was ever defined for the target mesh.

FIG. 2 is a schematic illustration showing an example combination of two controllers to animate an avatar gaze according to some embodiments. FIG. 2 shows a combined controller configuration 200. The first controller updates two morph targets (one which moves eyelids to the left, the other to the right) and two joint transforms (one for the rotation around axis Y of the left eye, the other for the right eye). The second controller updates two morph targets (one which moves eyelids upwards, the other downwards) and two joint transforms (one for the rotation around axis X of the left eye, the other for the right eye).

The first controller animates the eyes from left to right using weight $w_1$, first controller weight 220. The center row of FIG. 2 shows the avatar state when weight $w_1$ = -1 (left avatar 208), when weight $w_1$ = 0 (center avatar 210) and when weight $w_1$ = 1 (right avatar 212). The second controller animates the eyes from bottom to top using weight $w_2$, second controller weight 222. The center column of FIG. 2 shows the avatar state when weight $w_2$ = -1 (bottom avatar 216)), when weight $w_2$ = 0 (center avatar 210)) and when weight $w_2$ = 1 (top avatar 204)).

These two controllers may be used together to create numerous gazes. For example, the top-right avatar 206 in the figure shows a state when both controllers have the same weight, e.g., $w_1$ = 1 and $w_2$ = 1. The top-left avatar 202 in the figure is for first controller weight $w_1$ = -1 and second controller weight $w_2$ = 1. The bottom-left avatar 214 in the figure shows a state when both controllers have the same weight, e.g., $w_1$ = -1 and $w_2$ = -1. The bottom-right avatar 218 in the figure is for first controller weight $w_1$ = 1 and second controller weight $w_2$ = -1.

Controllers cannot be replaced by animations because such a replacement is understood to lead to an unscalable number of animations. The power of using controllers resides in the fact that numerous (if not infinite) shape modifications may be made using combinations of weights.

The Filmbox (FBX) format is a closed format that supports the encoding of controllers. The ’167 application introduces the MPEG_controllers extension, which allows for the encoding of controllers in a glTF file. The ’094 application introduces the AJIF format, which allows for the encoding of controllers. Each of these formats allows for the encoding of controllers, with each controller being uniquely identified by an index in a list.

This application describes a new carriage format that allows streaming of avatar-specific data to have a dynamic channel that allows the animation of avatar representations using controllers.

**Avatar Carriage Format**

The Avatar Carriage Format uses the glTF 2.0 format to explain the concept of a mapping schema between avatars, but the application is not exclusive to a single compression/transmission/rendering format.

**Controllers Correspondence Sample Entry**

A sample entry in a media metadata track is used to return the controller correspondence values used to map the controllers of an avatar mesh referenced by the "MPEG_node_avatar" extension onto the controllers of a target avatar mesh, hereinafter known as the source avatar (MPEG_node_avatar) and the target avatar (other avatar format). Every time instance is defined in the metadata track as a sample. So, for every time frame, a metadata track contains a sample of the controller correspondence values to the target avatar controllers. A sample contains an integer value that identifies the controllers index of the target avatar to which the controllers of the source mesh is mapped.

In a glTF JSON file, the correspondences values are provided through an extension to the "MPEG_node_avatar" as "MPEG_avatar_mapping". The "MPEG_avatar_mapping" extension refers to an accessor extended with "MPEG_accessor_timed" and "MPEG_circular_buffer" extensions. The number of correspondence values within a sample is smaller than or equal to the number of controllers of the "MPEG_node_avatar" mesh.

```
aligned(8) class ControllersCorrespondenceSampleEntry() extends
 MetadataSampleEntry('ccor') {
    unsigned int(3)  precision;
             bits(5) reserved;
}
```

**Code Listing 1.**

The integer *precision* specifies the length in bytes of the correspondence values within each sample. The value of *precision* shall be greater than 0 and smaller or equal to 4.

**Controllers Correspondence Sample Format**

The format of a sample includes the total number of correspondence values and the value itself that is associated with every controller of the source mesh.

Code Listing 1 and Code Listing 2 correspond to a communication packet that communicates the linking between a source mesh and a target mesh. For each controller in a selection (up to the total number of controllers in the source), the corresponding controller index in the target is transmitted.

```
aligned(8) class ControllersCorrespondenceSample {
    unsigned int(32) controller_count;
    for (i=0; i<controller_count; i++) {
        unsigned int(8*precision) controller_index[i];
    }
}
```

Code Listing 2.

The integer *controller_count* specifies the number of controllers of the source mesh to which a sample references.

The array *controller_index[i]* specifies the index of a controller in the target mesh that maps to a controller of the source mesh with an index equal to*i*.

**Processing for Correspondence Controllers Samples**

The value of the integer *precision* of the ControllersCorrespondenceSampleEntry class is conditioned as described below.

When *precision* is equal to 1, the *componentType* of the accessor referenced by the "MPEG_avatar_mapping" extension of "MPEG_node_avatar" and holding the controller correspondence values shall be equal to UNSIGNED_BYTE (5121).

When *precision* is equal to 2, the *componentType* of the accessor referenced by the "MPEG_avatar_mapping" extension of "MPEG_node_avatar" and holding the controller correspondence values shall be equal to UNSIGNED_SHORT (5123).

When *precision* is equal to 3 or 4, the *componentType* of the accessor referenced by the "MPEG_avatar_mapping" extension of "MPEG_node_avatar" and holding the controller correspondence values shall be equal to UNSIGNED_INT (5125).

The samples ControllersCorrespondenceSample are processed as described below. The integer *controller_count* is made available as "count" in the corresponding timed accessor information header fields of the corresponding frame of the circular buffer. The values in the array *controller_index[i]* are made available in the corresponding frame of the circular buffer.

**Controllers Animation Sample Entry**

For further background regarding the descriptions given below, please see sections 7.4 ("Carriage Format for Mesh Correspondence Values") and 7.5 ("Carriage Format for Pose and Weight") of the specification *Information Technology - Coded Representation of Immersive Media - Part 14: Scene Description,* ISO/IEC, ISO/IEC 23090-14:2023(E), Second Edition 2023-10, Draft Version MD23220, WG03, N01067 (2023) ("MPEG SD specification").

A sample entry in a media metadata track is used to animate an avatar mesh referenced by the "MPEG_node_avatar" extension using its controllers, hereinafter known as source avatar (MPEG_node_avatar). Every time instance is defined in the metadata track as a sample. So, for every time frame, a metadata track contains a sample of the controllers animation values to the source avatar controllers. A sample contains an integer value that identifies the controllers index of the source avatar to which the controllers' weights are applied.

In a glTF JSON file, the controllers are provided through an extension, such as "MPEG_controllers". See the '167 application, which refers to an accessor extended with the "MPEG_accessor_timed" and "MPEG_circular_buffer" extensions. The number of controller weight values within a sample shall be smaller than or equal to the number of controllers defined in the "MPEG_controllers" extension.

```
aligned(8) class ControllersAnimationSampleEntry() extends
 MetadataSampleEntry('cwgt') {
    unsigned int(3)  precision;
              bits(5) reserved;
}
```

**Code Listing 3.**

The integer *precision* specifies the length in bytes of the correspondence values within each sample. The value of *precision* shall be greater than 0 and smaller or equal to 4.

**Controllers Animation Sample Format**

The format of a sample includes the total number of correspondence values and the value itself that is associated with every controller of the source mesh, as well as the corresponding weight to apply.

Code Listing 3 and Code Listing 4 correspond to a communication packet that communicates: (1) the linking between a source mesh and a target mesh, and (2) the corresponding weights. For each controller in a selection (up to the total number of controllers in the source), the corresponding controller index in the target and the corresponding weight are transmitted. For some embodiments, a communication packet may transmit, for each controller in a selection (up to the total number of controllers in the source), the corresponding weights without the corresponding controller index in the target (the linking / mapping).

```
aligned(8) class ControllersAnimationSample {
    unsigned int(32) controller_count;
    for (i=0; i<controller_count; i++) {
        unsigned int(8*precision) controller_index[i];
        float(32)                 weight[i];
    }
}
```

**Code Listing 4.**

The integer *controller_count* specifies the number of controllers of the source mesh to which a sample references. The integer array *controller_index[i]* specifies the index of a controller in the source mesh with an index equal to i. The array *weight[i]* specifies the weight of a controller to be applied to the source mesh.

**Processing for Correspondence Controllers Samples**

The value of *precision* in ControllersAnimationSampleEntry is conditioned as described below.

When the integer *precision* is equal to 1, the *componentType* of the accessor referenced by the "MPEG_controllers" extension and holding the controller weight values shall be equal to UNSIGNED_BYTE (5121).

When the integer *precision* is equal to 2, the *componentType* of the accessor referenced by the "MPEG_controllers" extension and holding the controller weight values shall be equal to UNSIGNED_SHORT (5123).

When the integer *precision* is equal to 3 or 4, the *componentType* of the accessor referenced by the "MPEG_controllers" extension and holding the controller weight values shall be equal to UNSIGNED_INT (5125).

The samples ControllersAnimationSample are processed as described below. The integer *controller_count* is made available as "count" in the corresponding timed accessor information header fields in the corresponding frame of the circular buffer. The integer *controller_index* is made available in the corresponding frame of the circular buffer. The integer *weight* is made available in the corresponding frame of the circular buffer.

## Use Cases

For some embodiments, a user may control an avatar in real time, e.g., for a multi-user telepresence call. File segments may be authored in real time (based on local sensor readings of user pose, among other things), and the resulting segments are streamed to a conferencing controller or to other user endpoints.

For some embodiments, a gaming server animates a non-player character (NPC) avatar based on gaming logic. File segments that include correspondences and animation data are streamed to one or more devices of the users playing the game.

For some embodiments, a pre-made controller may be stored in a file format described herein and may be played back locally from the file. Furthermore, the pre-made animation may be streamed from a server to a client rendering device. These actions may be part of a 3D interactive movie type of experience.

For some embodiments, streaming may use class structures to describe and/or store correspondences and animation data for an avatar.

For some embodiments, the correspondences and/or amination data for an avatar is configured to support an ISO/BMFF format, such as ISO/BMFF-14496-12.

For some embodiments, the correspondences and/or amination data for an avatar is configured to support timed metadata, such as ISO/IEC 23001-10.

For some embodiments, the correspondences and/or amination data for an avatar is configured to support real-time streaming of the avatar data.

For some embodiments of the shadow mesh joint transforms and morph target weights, the target of those weights is not a shadow mesh (a component in the scope of MPEG mesh linking), but an avatar mesh. Furthermore, for some embodiments, morph target weights may be updated by itself without other updates. Also, skin transforms may be updated by itself without other updates. For an avatar application that does not need MPEG mesh linking mechanisms, it may be easier to deal with avatar joints/morph target rather than ones for a shadow mesh.

For some embodiments, the idea of the packets described in this application is to freely update the content of any accessor. Other packets may update the data in the glTF, but such updates must always be the same accessor. For instance, for some embodiments, the morph targets correspondence sample format always updates the morph target weights. The morph targets correspondence sample format is not be able to update another part of the glTF data. In other words, the mappings correspondence sample format may update anything, including what is updated in all the other sections, but such updates may be done in a less efficient way that uses more memory.

FIG. 3 is a flowchart illustrating an example process for updating controller information according to some embodiments. The example process 300 may start at the start box 302 for some embodiments. Some embodiments may start at a different box depending on the current state of one or more controllers.

At box 304, the controllers mapping may be sent, and a ControllersCorrespondenceSampleEntry process and a ControllersCorrespondenceSample process may be emitted. For some embodiments, at box 304, the ControllersCorrespondenceSampleEntry and ControllersCorrespondenceSample processes (or packets for some embodiments) may emit (or send or include) the controllers mapping data. See Code Listings 1 and 2 for more information for some embodiments.

At box 306, the source controllers weights may be sent, and a ControllersAnimationSampleEntry process and a ControllersAnimationSample process may emit data. For some embodiments, at box 306, the ControllersAnimationSampleEntry and ControllersAnimationSample processes (or packets for some embodiments) may emit (or send or include) the controllers weights data.

At box 308, for some embodiments, the process 300 may wait for a change. At decision box 310, there is a check to see if there is a change in the controllers mapping. If there is a change in the controllers mapping, then the process 300 follows the "true" line and returns to box 304. If there is no change in the controllers mapping, then the process 300 follows the "false" line and continues to the decision box 312. At decision box 312, there is a check to see if there is a change in the source weights. If there is a change in the source weights, then the process 300 follows the "true" line and returns to box 306. If there is no change in the controllers mapping, then the process 300 follows the "false" line and returns to the box 308 to wait for a change.

For some embodiments, process box 308 may be omitted, and the "false" line coming out of the check for a change of the source weights may go to the check for a change of the controllers mapping. For some embodiments, the example process 300 may be divided into separate processes. For some embodiments, one of these sub-processes may be executed, then one or more unrelated processes may be performed. A processor executing the example process 300 may then return and execute another one of the sub-processes related to example process 300.

Two avatars may not have the same controller set, so sending the correspondance from one set to the other may allow the control of one set to use the other set. For instance, in a game, the avatar of a user may be changed temporarily to another avatar. For example, such game play is common in role playing games (RPGs) when doing a quest. This temporary avatar may be limited to a few controllers and/or have different controllers. The user may still control the avatar using the usual controller set for the avatar. Hence, there may be no need to recalibrate the capture devices or to learn how to use the temporary controller set, as long as there is a mapping between the two controller sets.

For some embodiments: the processing model may include two steps: (1) A ControllersCorrespondenceSample packet is sent with the mapping between each source controller and (possibly) a target controller; and (2) A ControllersAnimationSample packet is sent with the weights of one or more source controllers. The application may update the weights of target controllers using the mapping and the weight of the source controllers which were modified. Step 1 may not need to be repeated if the mapping does not change.

For some embodiments, the weight of the source controller is used for the target controller without a change. For each source controller, the same or very similar controller may be used with the target set. Hence, the target set may not have separate controllers. The ControllersAnimationSample process (or packet for some embodiments) may emit source weights which are directly applied to the target controllers, using the mapping from the ControllersCorrespondence-Sample process (or packet for some embodiments).

FIG. 4 is a flowchart illustrating an example process for applying an avatar controller according to some embodiments. For some embodiments, an example process 400 may include obtaining 402 a plurality of first syntax structures, each first syntax structure defining an association between an input controller index value and a corresponding target controller index value for at least one mesh associated with an avatar. For some embodiments, the example process 400 may further include selecting 404 one of the first syntax structures. For some embodiments, the example process 400 may further include applying 406, to a mesh associated with the avatar, a transformation using the selected first syntax structure.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a plurality of first syntax structures, each first syntax structure defining an association between an input controller index value and a corresponding target controller index value for at least one mesh associated with an avatar; selecting one of the first syntax structures; and applying, to a mesh associated with the avatar, a transformation using the selected first syntax structure.

Some embodiments of the example method may further include obtaining a plurality of second syntax structures, each second syntax structure defining an association between an input weight value and a corresponding transformation of the mesh associated with the avatar.

Some embodiments of the example method may further include: selecting one of the second syntax structures corresponding to the selected first syntax structure; and applying, to the mesh associated with the avatar, a transformation using the selected second syntax structure.

Some embodiments of the example method may further include: obtaining a plurality of third syntax structures, each third syntax structure defining an association between a separate input weight value and a corresponding transformation of the mesh associated with the avatar; selecting one of the third syntax structures; and applying, to a mesh associated with the avatar, a transformation using the selected second and third syntax structures.

For some embodiments of the example method, at least one of the first and second syntax structures are controller structures in an MPEG_controllers extension.

For some embodiments of the example method, wherein at least one of the first and second syntax structures are controller structures, and wherein at least one of the first and second syntax structures are obtained from a glTF file.

Some embodiments of the example method may further include obtaining a plurality of fourth syntax structures, each fourth syntax structure defining an association between a second input controller index value and a corresponding second target controller index value for at least a second mesh associated with the avatar; obtaining a plurality of fifth syntax structures, each fifth syntax structure defining an association between another input weight value and a corresponding transformation of the second mesh associated with the avatar; selecting one of the fourth syntax structures and an associated structure of the fifth syntax structures; and applying, to a mesh associated with the avatar, a transformation using the selected fourth and fifth syntax structures.

Some embodiments of the example method may further include displaying, in an immersive environment, the mesh associated with the avatar.

For some embodiments of the example method, the mesh associated with the avatar is also associated with a node in a scene description.

Some embodiments of the example method may further include animating the node associated with the avatar by applying changing weights to the transformation corresponding to one of the selected first syntax structure and the selected second syntax structure.

For some embodiments of the example method, the association defined in each first syntax structure corresponds to a mapping between a source mesh and a target mesh.

For some embodiments of the example method, wherein the source mesh corresponds to a first resolution, wherein the target mesh corresponds to a second resolution, and wherein the first resolution is different than the second resolution.

For some embodiments of the example method, wherein the source mesh corresponds to a first avatar, wherein the target mesh corresponds to a second avatar, and wherein the first avatar is distinct from the second avatar.

For some embodiments of the example method, at least one controller associated with the first syntax structure is associated with an emotion corresponding to the avatar.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

**1.** A method comprising:

obtaining a plurality of first syntax structures, each first syntax structure defining an association between an input controller index value and a corresponding target controller index value for at least one mesh associated with an avatar;
selecting one of the first syntax structures; and
applying, to a mesh associated with the avatar, a transformation using the selected first syntax structure.

**2.** The method or claim 1, further comprising obtaining a plurality of second syntax structures, each second syntax structure defining an association between an input weight value and a corresponding transformation of the mesh associated with the avatar.

**3.** The method of any one of claims 1-2, further comprising:

selecting one of the second syntax structures corresponding to the selected first syntax structure; and
applying, to the mesh associated with the avatar, a transformation using the selected second syntax structure.

**4.** The method of any one of claims 2-3, further comprising:

obtaining a plurality of third syntax structures, each third syntax structure defining an association between a separate input weight value and a corresponding transformation of the mesh associated with the avatar;
selecting one of the third syntax structures; and
applying, to a mesh associated with the avatar, a transformation using the selected second and third syntax structures.

**5.** The method of any one of claims 1-4, wherein at least one of the first and second syntax structures are controller structures in an MPEG_controllers extension.

**6.** The method of any one of claims 1-4,

wherein at least one of the first and second syntax structures are controller structures, and
wherein at least one of the first and second syntax structures are obtained from a glTF file.

**7.** The method of any one of claims 1-6, further comprising:

obtaining a plurality of fourth syntax structures, each fourth syntax structure defining an association between a second input controller index value and a corresponding second target controller index value for at least a second mesh associated with the avatar;

obtaining a plurality of fifth syntax structures, each fifth syntax structure defining an association between another input weight value and a corresponding transformation of the second mesh associated with the avatar;
selecting one of the fourth syntax structures and an associated structure of the fifth syntax structures; and
applying, to a mesh associated with the avatar, a transformation using the selected fourth and fifth syntax structures.

**8.** The method of any one of claims 1-7, further comprising displaying, in an immersive environment, the mesh associated with the avatar.

**9.** The method of any one of claims 1-7, wherein the mesh associated with the avatar is also associated with a node in a scene description.

**10.** The method of claim 9, further comprising animating the node associated with the avatar by applying changing weights to the transformation corresponding to one of the selected first syntax structure and the selected second syntax structure.

**11.** The method of any one of claims 1-10, wherein the association defined in each first syntax structure corresponds to a mapping between a source mesh and a target mesh.

**12.** The method of claim 11,

wherein the source mesh corresponds to a first resolution,
wherein the target mesh corresponds to a second resolution, and
wherein the first resolution is different than the second resolution.

**13.** The method of claim 11,

wherein the source mesh corresponds to a first avatar,
wherein the target mesh corresponds to a second avatar, and
wherein the first avatar is distinct from the second avatar.

**14.** The method of any one of claims 1-13, wherein at least one controller associated with the first syntax structure is associated with an emotion corresponding to the avatar.

**15.** An apparatus comprising:

a processor; and
a memory storing instructions operative, when executed by the processor, to cause the apparatus to perform the method of any one of claims 1 through 14.

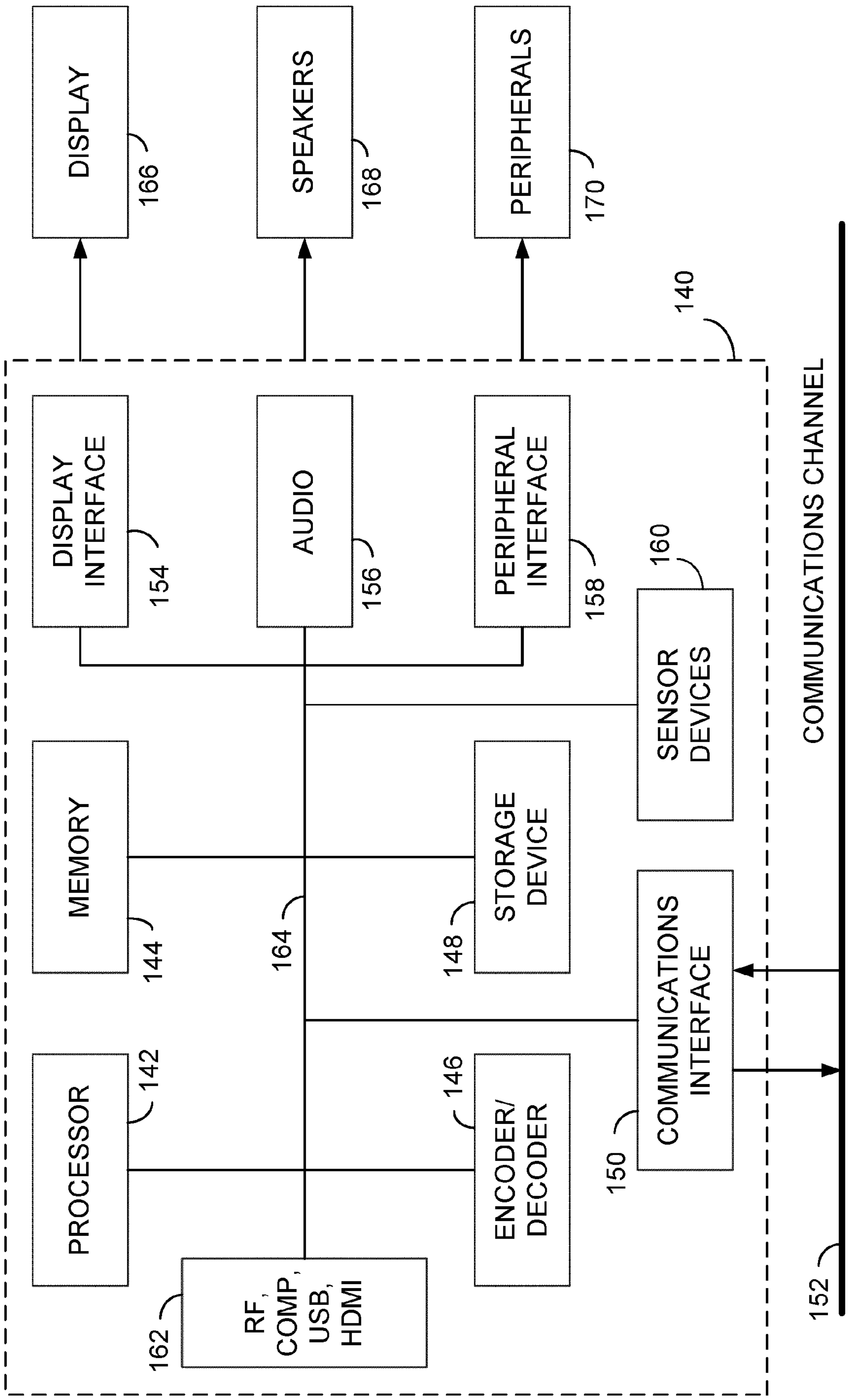
DISPLAY
166
SPEAKERS
168
PERIPHERALS
170
140
DISPLAY INTERFACE
154
AUDIO
156
PERIPHERAL INTERFACE
158
160
SENSOR DEVICES
MEMORY
144
STORAGE DEVICE
148
164
COMMUNICATIONS INTERFACE
150
PROCESSOR
142
ENCODER/ DECODER
146
RF, COMP, USB, HDMI
162
COMMUNICATIONS CHANNEL
152

FIG. 1A

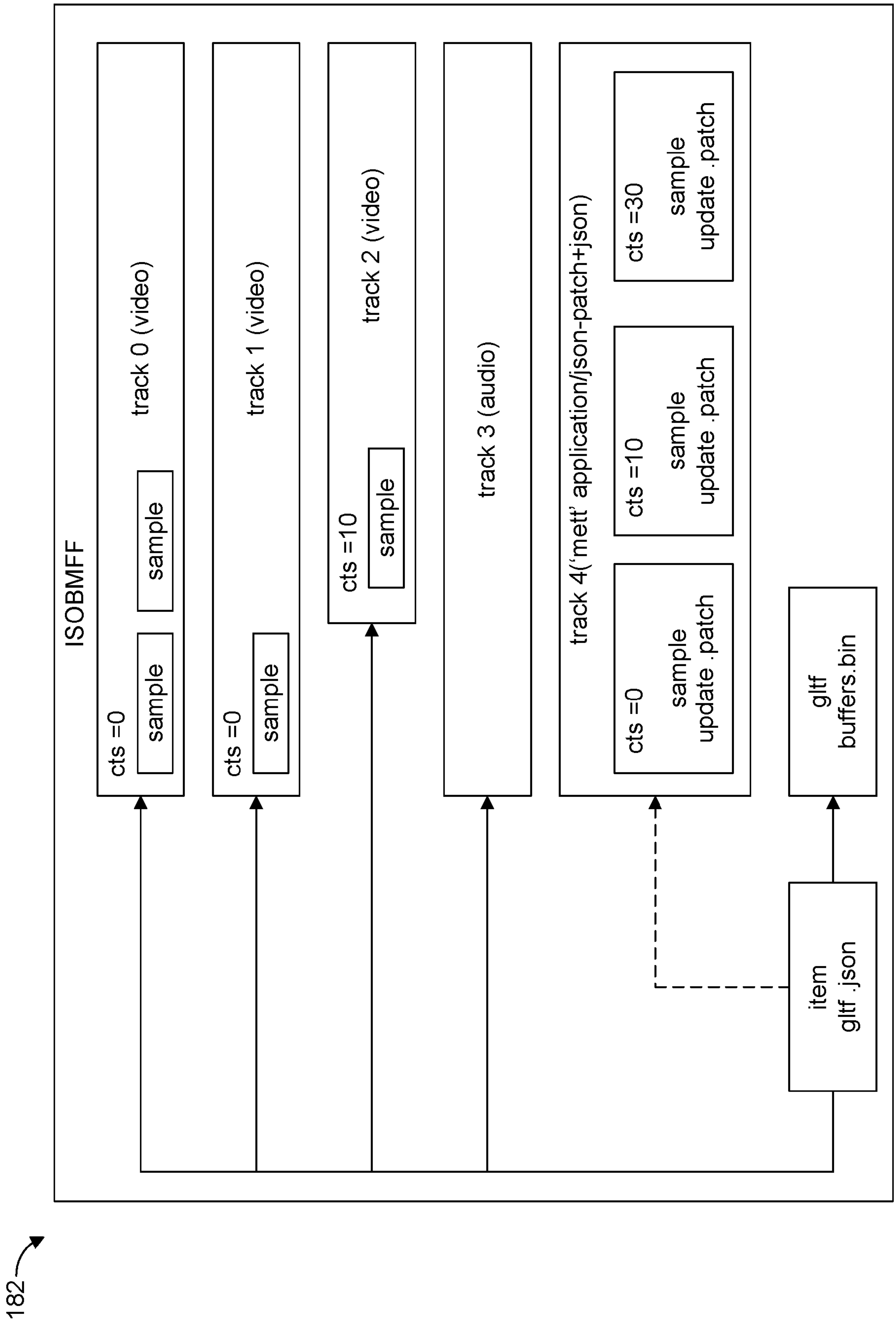
182
ISOBMFF
cts =0
sample
sample
track 0 (video)
cts =0
sample
track 1 (video)
cts =10
sample
track 2 (video)
track 3 (audio)
track 4('mett' application/json-patch+json)
cts =0
sample
update .patch
cts =10
sample
update .patch
cts =30
sample
update .patch
gltf
buffers.bin
item
gltf .json

FIG. 1B

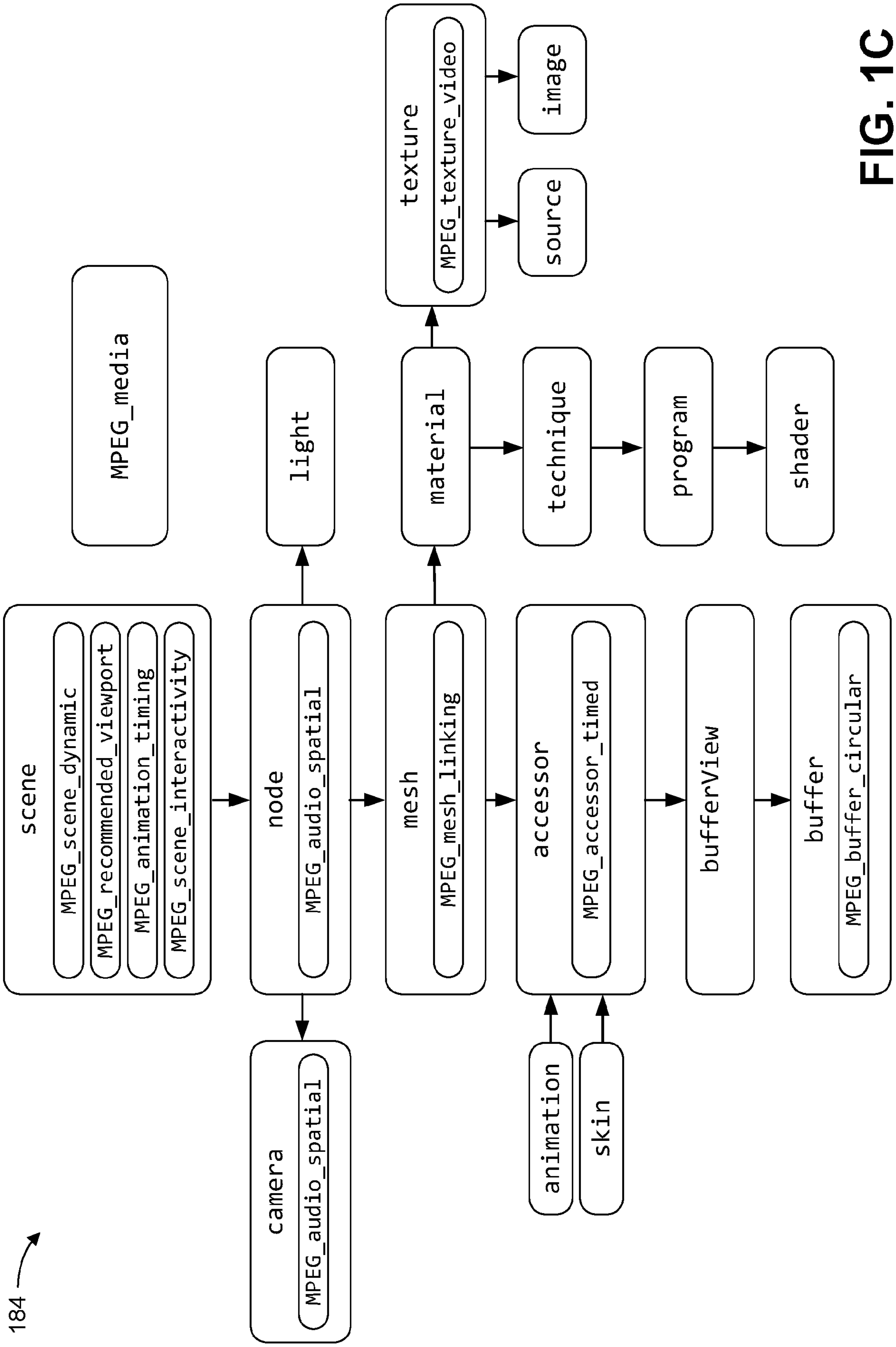
184
scene
MPEG_scene_dynamic
MPEG_recommended_viewport
MPEG_animation_timing
MPEG_scene_interactivity
MPEG_media
node
MPEG_audio_spatial
camera
MPEG_audio_spatial
light
mesh
MPEG_mesh_linking
material
texture
MPEG_texture_video
source
image
technique
program
shader
accessor
MPEG_accessor_timed
animation
skin
bufferView
buffer
MPEG_buffer_circular

FIG. 1C

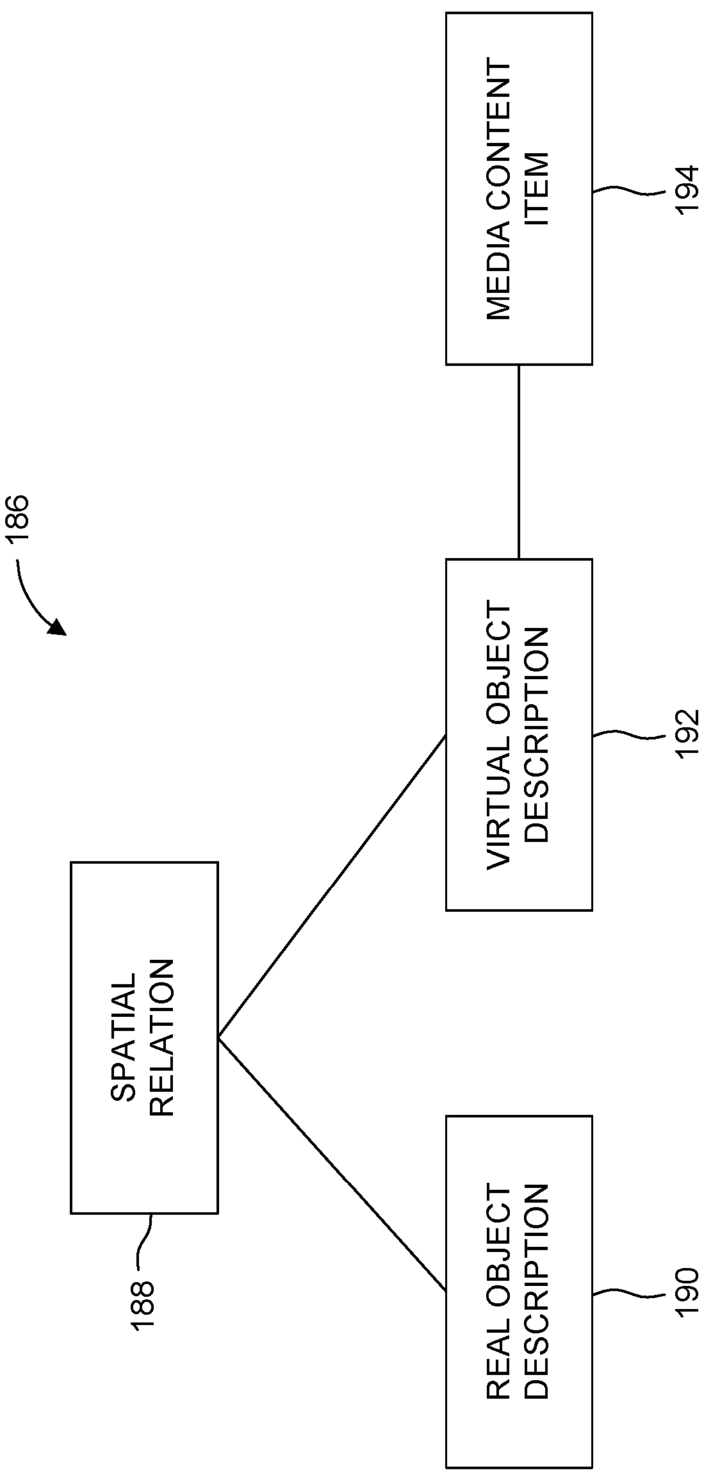
186
SPATIAL RELATION
188
REAL OBJECT DESCRIPTION
190
VIRTUAL OBJECT DESCRIPTION
192
MEDIA CONTENT ITEM
194

FIG. 1D

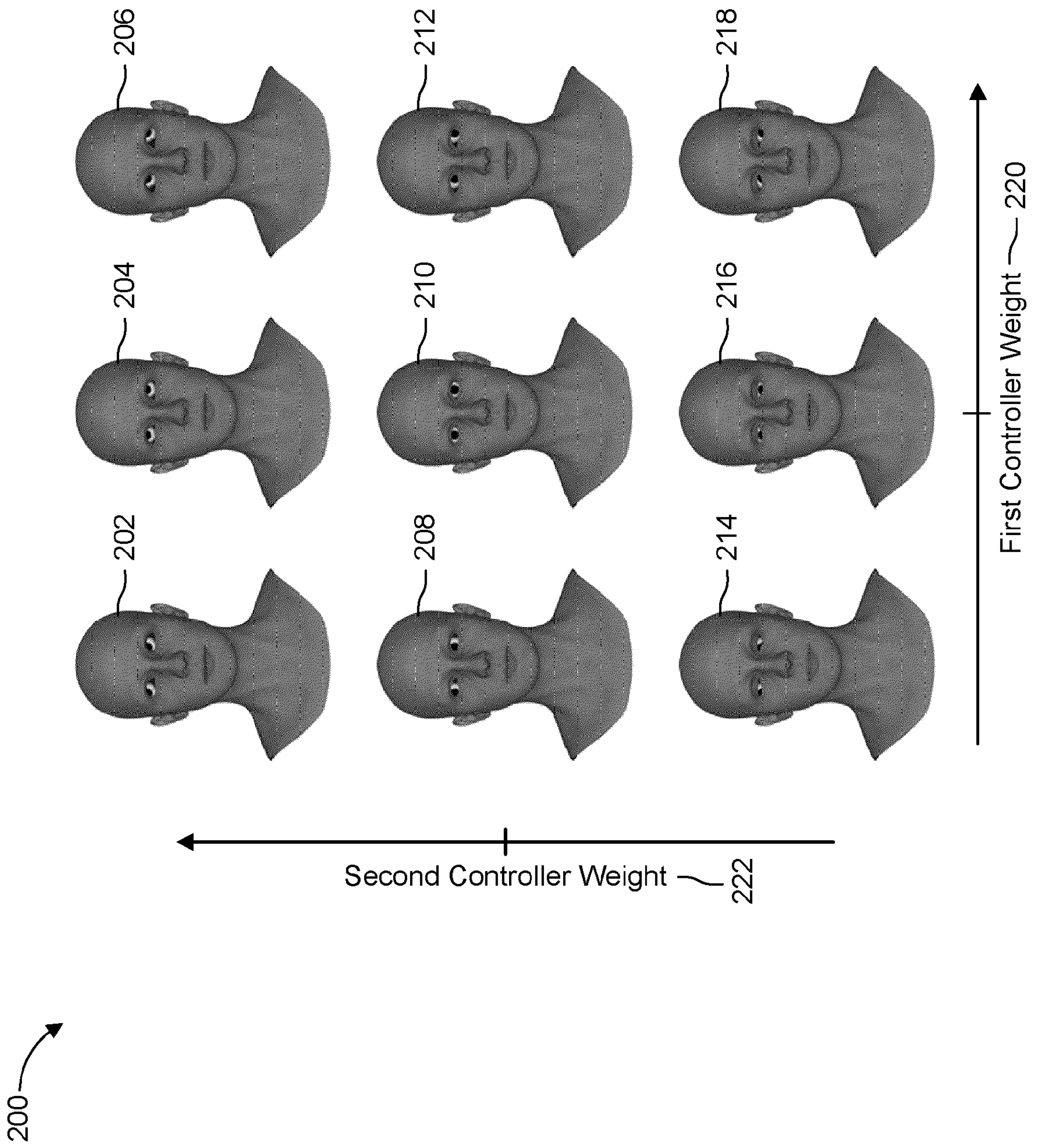
200
202
204
206
208
210
212
214
216
218
First Controller Weight
220
Second Controller Weight
222

FIG. 2

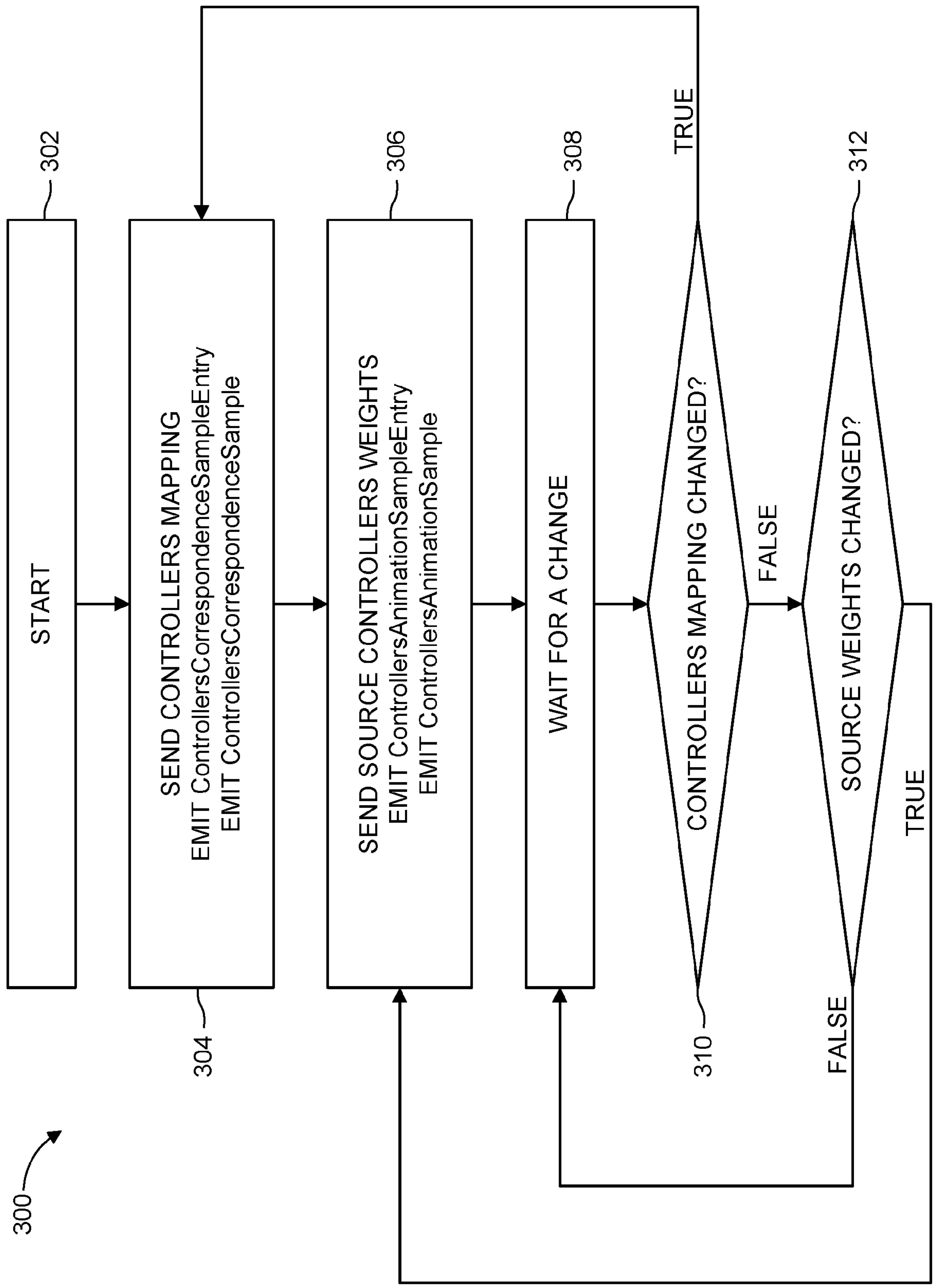
300
302
START
304
SEND CONTROLLERS MAPPING
EMIT ControllersCorrespondenceSampleEntry
EMIT ControllersCorrespondenceSample
306
SEND SOURCE CONTROLLERS WEIGHTS
EMIT ControllersAnimationSampleEntry
EMIT ControllersAnimationSample
308
WAIT FOR A CHANGE
310
CONTROLLERS MAPPING CHANGED?
TRUE
FALSE
312
SOURCE WEIGHTS CHANGED?
TRUE
FALSE

FIG. 3

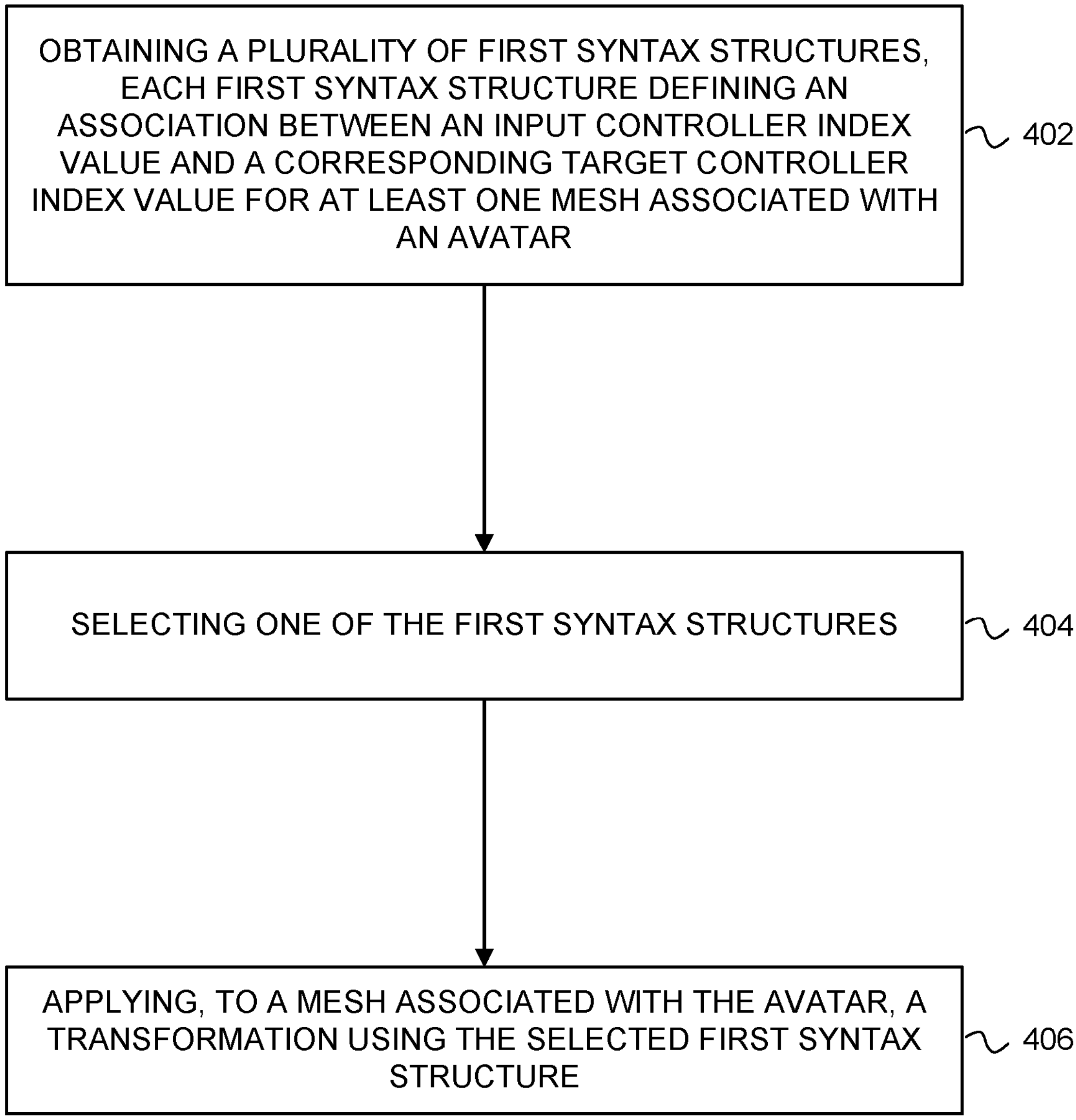
OBTAINING A PLURALITY OF FIRST SYNTAX STRUCTURES, EACH FIRST SYNTAX STRUCTURE DEFINING AN ASSOCIATION BETWEEN AN INPUT CONTROLLER INDEX VALUE AND A CORRESPONDING TARGET CONTROLLER INDEX VALUE FOR AT LEAST ONE MESH ASSOCIATED WITH AN AVATAR
402
SELECTING ONE OF THE FIRST SYNTAX STRUCTURES
404
APPLYING, TO A MESH ASSOCIATED WITH THE AVATAR, A TRANSFORMATION USING THE SELECTED FIRST SYNTAX STRUCTURE
406

FIG. 4

400

Europäisches Patentamt
European Patent Office
Office européen des brevets

# EUROPEAN SEARCH REPORT

Application Number
EP 24 30 6391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOAO REGATEIRO (INTERDIGITAL) ET AL: "[42][SD] Avatar format for mapping and carriage of animation data", 146. MPEG MEETING; 20240422 - 20240426; RENNES; (MOTION PICTURE EXPERT GROUP OR ISO/IEC JTC1/SC29/WG11), , no. m67884 17 April 2024 (2024-04-17), XP030319136, Retrieved from the Internet: URL:https://dms.mpeg.expert/doc_end_user/documents/146_Rennes/wg11/m67884-v1-m67884_avatar_format_mapping_v1.zip m67884_avatar_format_mapping_v1.docx [retrieved on 2024-04-17] | 1-6,8-15 | INV. H04N21/81 G06T13/20 H04N21/8543 H04N21/8545 |
| Y | * the whole document * | 7 | |
| | ----- | | |
| Y | WO 2019/209431 A1 (MAGIC LEAP INC [US]) 31 October 2019 (2019-10-31) | 7 | |
| A | * paragraph [0163] * * paragraph [0234] - paragraph [0243] * * paragraph [0257] - paragraph [0271] * * figure 16b & 17 * | 1-6,8-15 | |
| | ----- | | TECHNICAL FIELDS SEARCHED (IPC) H04N G06T |
| A | US 2024/135647 A1 (BOUAZIZI IMED [US] ET AL) 25 April 2024 (2024-04-25) * the whole document * | 1-15 | |
| | ----- | | |
| A | US 2023/260215 A1 (HELLGE CORNELIUS [DE] ET AL) 17 August 2023 (2023-08-17) * paragraph [0043] * | 1-15 | |
| | ----- | | |
| | -/-- | | |

The present search report has been drawn up for all claims

1

| Place of search | Date of completion of the search | Examiner |
|---|---|---|
| The Hague | 13 January 2025 | Ong, Bee |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 30 6391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Information technology - Runtime 3D asset delivery format - Khronos glTF(TM) 2.0", ISO/IEC 12113:2022, IEC, 3, RUE DE VAREMBÉ, PO BOX 131, CH-1211 GENEVA 20, SWITZERLAND , 26 July 2022 (2022-07-26), pages 1-189, XP082037307, Retrieved from the Internet: URL:https://api.iec.ch/harmonized/publications/download/3038945 [retrieved on 2022-07-26] * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 13 January 2025 | Ong, Bee |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO. EP 24 30 6391

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2025

| Patent document cited in search report | Publication date | Patent family member(s) | Publication date |
|---|---|---|---|
| WO 2019209431 A1 | 31-10-2019 | US 2019325633 A1 | 24-10-2019 |
| | | US 2020388066 A1 | 10-12-2020 |
| | | US 2022020198 A1 | 20-01-2022 |
| | | US 2023073991 A1 | 09-03-2023 |
| | | WO 2019209431 A1 | 31-10-2019 |
| US 2024135647 A1 | 25-04-2024 | TW 202424902 A | 16-06-2024 |
| | | US 2024135647 A1 | 25-04-2024 |
| | | WO 2024086541 A1 | 25-04-2024 |
| US 2023260215 A1 | 17-08-2023 | CN 116583881 A | 11-08-2023 |
| | | EP 4222711 A1 | 09-08-2023 |
| | | KR 20230079256 A | 05-06-2023 |
| | | US 2023260215 A1 | 17-08-2023 |
| | | WO 2022069616 A1 | 07-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 24305521 A
- EP 24305458 A
- EP 24305094 A
- EP 23306701 A
- EP 23306167 A